(19) **Europäisches Patentamt European Patent Office Office européen des brevets**

(11) **EP 4 773 046 A1**

(12) **EUROPEAN PATENT APPLICATION**

(43) Date of publication:
08.07.2026 Bulletin 2026/28

(21) Application number: 25225374.5

(22) Date of filing: 19.12.2025

(51) International Patent Classification (IPC):
$G06N\ 3/098^{(2023.01)}$ $G06N\ 3/045^{(2023.01)}$
$G06N\ 3/084^{(2023.01)}$

(52) Cooperative Patent Classification (CPC):
G06N 3/045; G06N 3/084; G06N 3/098

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 06.01.2025 KR 20250001862

(71) Applicant: UNIVERSITY-INDUSTRY
COOPERATION GROUP
OF KYUNG HEE UNIVERSITY
Yongin-si, Gyeonggi-do 17104 (KR)

(72) Inventors:
• **HONG, Choong Seon**
**16941 Yongin-si, Gyeonggi-do (KR)**
• **LE, QUANG HUY**
**16705 Suwon-si, Gyeonggi-do (KR)**
• **YOON, Ji Su**
**17104 Yongin-si, Gyeonggi-do (KR)**

(74) Representative: **Isarpatent**
**Patent- und Rechtsanwälte PartG mbB**
**Friedrichstraße 31**
**80801 München (DE)**

(54) **MULTIMODAL FEDERATED LEARNING METHOD AND SYSTEM IN MODALITY-MISSING ENVIRONMENTS**

(57) Disclosed are a multimodal federated learning method and system in modality-missing environments. The multimodal federated learning system includes a server and a plurality of clients, each provided with a local model, a neural network structure of the local model provided by each of the clients is identical, a client type of each of the clients is categorized based on whether a modality of training data used to train the local model is missing, each of the clients generates a class-specific local prototype from data of the input modality and transmit the class-specific local prototype to the server, and the server aggregates class-specific local prototypes received from a plurality of clients of different client types, generates a class-specific complete prototype based on the aggregated class-specific local prototypes, and transmits the generated class-specific complete prototype to each of the clients.

FIG. 1

EP 4 773 046 A1

**Description**

BACKGROUND

**1. Field**

Embodiments of the present disclosure relate to a multimodal federated learning technique in modality-missing environments.

**2. Description of Related Art**

Multimodal Federated Learning (MFL) has emerged as a distributed machine learning paradigm, enabling multiple clients with different modalities to collaborate on training a global model across various data sources without sharing their private data. However, issues such as data heterogeneity and severely missing modalities pose crucial hindrances to the robustness of MFL, significantly impacting the performance of global models.

For example, in real-world applications such as healthcare and autonomous driving, the occurrence of missing modalities often arises from factors such as sensor failure, creating knowledge gaps during the training process. In particular, since alignment errors occur during the local training phase when modalities are absent, a federated learning method capable of resolving the missing modality problem is required.

Examples of related art include Korean patent registration No. 10-2646338 (2024.03.11)

**SUMMARY**

Embodiments of the present disclosure provide a multimodal federated learning method and system in modality-missing environments.

According to an embodiment of the present disclosure, there is provided a multimodal federated learning system including a server and a plurality of clients, each provided with a local model, a neural network structure of the local model provided by each of the clients is identical, a client type of each of the clients is categorized based on whether a modality of training data used to train the local model is missing, each of the clients is configured to generate a class-specific local prototype from data of the input modality and transmit the class-specific local prototype to the server, the server is configured to aggregate class-specific local prototypes received from a plurality of clients of different client types, generate a class-specific complete prototype based on the aggregated class-specific local prototypes, and transmit the generated class-specific complete prototype to each of the clients.

In the multimodal federated learning system, data of a first modality and second modality may be used the training data, a client of a type in which the data of the first modality is present but the data of the second modality is missing may be set as a first client, a client of a type in which the data of the first modality is missing but the data of the second modality is present may be set as a second client, and a client of a type in which both the data of the first modality and the data of the second modality are present may be set as a third client.

The server may be configured to generate the class-specific complete prototype using Equation below.

$$\text{Equation}$$

$$P^k = \frac{1}{N} \sum_{i \in N} \{p^k_{Ai}, p^k_{Bi}, p^k_{ABi}\} \in \mathbb{R}^d$$

$$P = [P^1, P^2, \ldots, P^k],$$

$P^k$: complete prototype of class k

N: the number of clients

$p^k_{Ai}$ : local prototype of class k of first client

$p^k_{Bi}$ : local prototype of class k of second client

$p_{ABi}^{k}$ : local prototype of class k of third client

$\mathbb{R}^{d}$ : shared representation space

The first client may be configured to input data of a first modality into a first encoder to extract a first modality representation, fill missing data of a second modality with zeros and input the missing data of the second modality into a second encoder to extract a second modality representation, input the first modality representation and the second modality representation into a fuser to generate a modality-shared representation, and input the modality-shared representation into a classifier to output a class prediction value.

The first client may be configured to input the modality-shared representation into a first projection head to project the modality-shared representation into a shared representation space and generate a local prototype of each class by averaging the modality-shared representations belonging to each class.

The first client may be configured to perform training by a cross-modal prototype regularization (CMPR) loss based on the modality-shared representation projected into the shared representation space and the class-specific complete prototype.

The first client may be configured to input the first modality representation into a second projection head and project the first modality representation into the shared representation space, and perform training by a cross-modal prototype contrastive (CMPC) loss, which causes the first modality representation to be closer to a complete prototype of the same class as the first modality representation and to be further away from a complete prototype of a different class from the first modality representation, based on the first modality representation projected into the shared representation space and the class-specific complete prototype.

The first client may be configured to input the second modality representation into the second projection head to project the second modality representation into the shared representation space, and perform training by a cross-modal alignment (CMA) loss based on the first modality representation and second modality representation projected into the shared representation space.

The first client may be configured to input the modality-shared representation into the first projection head and project the modality-shared representation into the shared representation space, input a CMPR loss based on the modality-shared representation projected into the shared representation space and the class-specific complete prototype and the first modality representation into a second projection head and project the CMPR loss and the first modality representation into the shared representation space, input the CMPC loss based on the first modality representation projected into the shared representation space and the class-specific complete prototype and the second modality representation into the second projection head, and project the CMPC loss and the second modality representation into the shared representation space, and perform training by a CMA loss based on the first modality representation and second modality representation projected into the shared representation space.

The second client may be configured to fill missing data of a first modality with zeros and input the missing data of the first modality into a first encoder to extract a first modality representation, input data of a second modality into a second encoder to extract a second modality representation, input the first modality representation and the second modality representation into a fuser to generate a modality-shared representation, and input the modality-shared representation into a classifier to output a class prediction value.

The second client may be configured to input the modality-shared representation into a first projection head to project the modality-shared representation into a shared representation space, and generate a local prototype of each class by averaging the modality-shared representations belonging to each class.

The second client may be configured to perform training by a CMPR loss based on the modality-shared representation projected into the shared representation space and the class-specific complete prototype.

The second client may be configured to input the second modality representation into a second projection head and project the second modality representation into the shared representation space, and perform training by a CMPC loss, which causes the second modality representation to be closer to a complete prototype of the same class as the second modality representation and to be further away from a complete prototype of a different class from the second modality representation, based on the second modality representation projected into the shared representation space and the class-specific complete prototype.

The second client may be configured to input the first modality representation into the second projection head and project the first modality representation into the shared representation space, and perform training by a CMA loss based on the first modality representation and second modality representation projected into the shared representation space.

The second client may be configured to input the modality-shared representation into the first projection head and project the modality-shared representation into the shared representation space, input a CMPR loss based on the modality-shared representation projected into the shared representation space and the class-specific complete prototype and the second modality representation into a second projection head and project the CMPR loss and the second modality representation into the shared representation space, input a CMPC loss based on the second modality representation projected into the shared representation space and the class-specific complete prototype and the first modality representation into the second projection head, and project the CMPC loss and the first modality representation into the shared representation space, and perform training by a CMA loss based on the first modality representation and second modality representation projected into the shared representation space.

The third client may be configured to input data of a first modality into a first encoder to extract a first modality representation, input data of a second modality into a second encoder to extract a second modality representation, input the first modality representation and the second modality representation into a fuser to generate a modality-shared representation, and input the modality-shared representation into a classifier to output a class prediction value.

The third client may be configured to input the modality-shared representation into a first projection head and project the modality-shared representation into a shared representation space, input a CMPR loss based on the modality-shared representation projected into the shared representation space and the class-specific complete prototype, the first modality representation, and the second modality representation into a second projection head and project the CMPR loss the first modality representation, and the second modality representation into the shared representation space, and perform training by a CMPC loss based on the first modality representation and second modality representation projected into the shared representation space and the class-specific complete prototype, and a CMA loss based on the first modality representation and second modality representation projected into the shared representation space.

According to an embodiment of the present disclosure, there is provided a multimodal federated learning method performed on a computing device for performing multimodal federated learning with a server, the computing device including one or more processors, a memory that stores one or more programs executed by the one or more processors, and a local model, the multimodal federated learning uses data of a first modality and second modality as training data, the computing device being a client of a type in which the data of the first modality is present but the data of the second modality is missing, and the multimodal federated learning method incudes receiving a class-specific complete prototype from the server, inputting the data of the first modality into a first encoder to extract a first modality representation, filling the missing data of the second modality with zeros and inputting the missing data of the second modality into a second encoder to extract a second modality representation, inputting the first modality representation and the second modality representation into a fuser to generate a modality-shared representation, and inputting the modality-shared representation into a classifier to output a class prediction value.

According to another embodiment of the present disclosure, there is provided a multimodal federated learning method performed on a computing device for performing multimodal federated learning with a server, the computing device including one or more processors, a memory that stores one or more programs executed by the one or more processors, and a local model, the multimodal federated learning uses data of a first modality and a second modality as training data, the computing device is a client of a type in which the data of the first modality is not present and the data of the second modality is present, and the multimodal federated learning method incudes receiving a class-specific complete prototype from the server, filling the missing data of the first modality with zeros and the missing data of the first modality into a first encoder to extract a first modality representation, inputting the data of the second modality into a second encoder to extract a second modality representation, inputting the first modality representation and the second modality representation into a fuser to generate a modality-shared representation, and inputting the modality-shared representation into a classifier to output a class prediction value.

According to still another embodiment of the present disclosure, there is provided a multimodal federated learning method performed on a computing device for performing multimodal federated learning with a server, the computing device including one or more processors, a memory that stores one or more programs executed by the one or more processors, and a local model, the multimodal federated learning uses data of a first modality and second modality as training data, the computing device is a client of a type in which both the data of the first modality and the data of the second modality are present, and the multimodal federated learning method incudes receiving a class-specific complete prototype from the server, inputting the data of the first modality into a first encoder to extract a first modality representation, inputting the data of the second modality into a second encoder to extract a second modality representation, inputting the first modality representation and the second modality representation into a fuser to generate a modality-shared representation, and inputting the modality-shared representation into a classifier to output a class prediction value.

## BRIEF DESCRIPTION OF THE DRAWINGS

FIG. 1 is a diagram illustrating the configuration of a multimodal federated learning system according to an embodiment of the present disclosure.
FIG. 2 is a diagram illustrating the operation of a multimodal federated learning system according to an embodiment of the present disclosure.

FIG. 3 is a block diagram illustrating a computing environment including a computing device suitable for use in exemplary embodiments.

## DETAILED DESCRIPTION

Hereinafter, specific embodiments of the present disclosure will be described with reference to the drawings. The following detailed description is provided to facilitate a comprehensive understanding of the methods, apparatuses, and/or systems described herein. However, this is only an example and the present disclosure is not limited thereto.

In describing embodiments of the present disclosure, if it is determined that a specific description of a related known function of the preset invention may unnecessarily obscure the gist of the present disclosure, the detailed description thereof will be omitted. The terms described below are terms defined in consideration of the functions in the present disclosure, and vary depending on the intention or custom of the user or operator. Therefore, the definition should be made based on the contents throughout this specification. The terminology used in the detailed description is for the purpose of describing embodiments of the present disclosure only and should not be construed as limiting. Unless expressly used otherwise, singular forms include plural forms. In this description, the terms "including" or "comprising" are intended to refer to certain features, numbers, steps, operations, elements, portions or combinations thereof, and should not be construed to exclude the presence or possibility of one or more other features, numbers, steps, operations, elements, portions or combinations thereof other than those described.

In addition, the terms first, second, etc. may be used to describe various components, but the components should not be limited by the terms. The terms may be used for the purpose of distinguishing one component from another component. For example, without departing from the scope of the present disclosure, a first component may be referred to as a second component, and similarly, a second component may also be referred to as a first component.

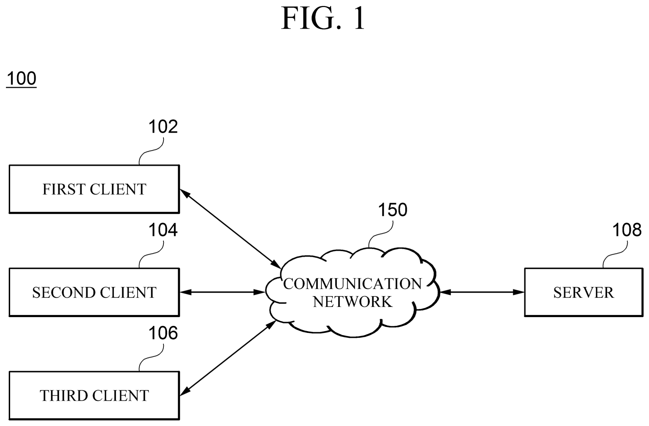

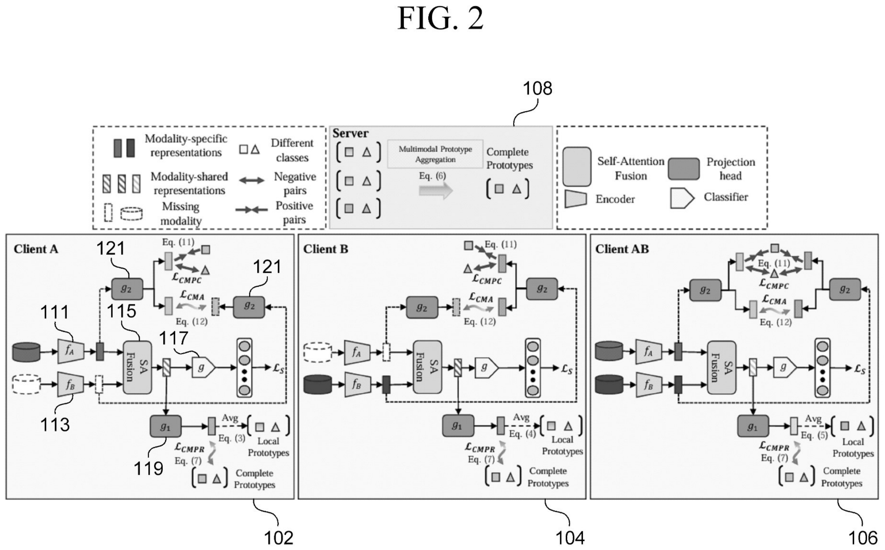

FIG. 1 is a diagram illustrating the configuration of a multimodal federated learning system according to an embodiment of the present disclosure. FIG. 2 is a diagram illustrating the operation of a multimodal federated learning system according to an embodiment of the present disclosure.

Referring to FIGS. 1 and 2, a multimodal federated learning system 100 may include a first client 102, a second client 104, a third client 106, and a server 108.

The first client 102, the second client 104, and the third client 106 are communicatively connected to the server 108 via a communication network 150. Here, the communication network 150 may include the Internet, one or more local area networks (LANs), wide area networks (WANs), cellular networks, mobile networks, other types of networks, or a combination of these networks.

The first client 102, the second client 104, and the third client 106 may each include a local model. Here, the neural network structure of the local model included in each of the clients 102, 104, and 106 may be the same. For convenience of description, in FIG. 2, only the neural network structure of the first client 102 is indicated by drawing reference symbols. In an embodiment, the local model may be, but is not limited to, a machine learning model for classification.

The types of the first client 102, the second client 104, and the third client 106 may be categorized based on whether a modality of training data used to train a local model is missing.

In an embodiment, it is assumed that the multimodal federated learning system 100 learns using data of a first modality (e.g., image) and second modality (e.g., text) as training data. In the disclosed embodiment, "modality" may mean a type of training data.

The first client 102 may be a client of a type in which data of a first modality is present but data of a second modality is missing. The second client 104 may be a client of a type in which the data of the first modality is missing and the data of the second modality is present. The third client 106 may be a client of a type in which both the data of the first modality and the data of the second modality are present.

Each of the clients 102, 104, and 106 may generate a class-specific local prototype from input modality data, and transmit the class-specific local prototype to the server 108.

The server 108 may aggregate class-specific local prototypes received from the first to third clients 102, 104, and 106, which are different types of clients, for each communication round. In an embodiment, the server 108 may generate a class-specific complete prototype by averaging the class-specific local prototypes received from the clients 102, 104, and 106. The server 108 may transmit the class-specific complete prototype to each of the clients 102, 104, and 106. Here, the class-specific complete prototype may be expressed by Equation 1 below.

Equation 1

$$P^k = \frac{1}{N} \sum_{i \in N} \{ p^k_{Ai}, p^k_{Bi}, p^k_{ABi} \} \in \mathbb{R}^d$$

$$P = [P^1, P^2, \ldots, P^k],$$

$P^k$: complete prototype of class k

N: number of clients

$p^k_{Ai}$ : local prototype of class k of first client

$p^k_{Bi}$ : local prototype of class k of second client

$p^k_{ABi}$ : local prototype of class k of third client

$\mathbb{R}^d$ : shared representation space

The multimodal federated learning system 100 may perform federated learning by the overall loss function according to Equation 2 below.

Equation 2

$$\operatorname*{argmin}_{\theta} L(\theta) = \sum_{i=1}^{N} \frac{|D_i|}{|D|} \mathcal{L}_i(\theta_i, D_i)$$

$\theta$: neural network parameters of entire network
N: the number of clients
D: the number of sample data held by client
Di: multimodal data held by i-th client
$\theta_i$: neural network parameter of i-th client

$\mathcal{L}_i$ : loss function of i-th client

Hereinafter, multimodal federated learning performed on the first client 102 will be described.
The first client 102 may input data of a first modality into the first encoder 111 to extract a first modality representation. Since data of a second modality are present in the first client 102, the first client 102 may input zero data, i.e., a value of 0, as the data of the second modality into a second encoder 113 to extract a second modality representation. That is, the first client 102 may fill the missing data of the second modality with zeros and input the missing data of the second modality into the second encoder 113.
The first client 102 may input the first modality representation and the second modality representation into a fuser 115 to generate a modality-shared representation. That is, the fuser 115 may play a role in integrating representations of two different modalities in the same latent space. The first client 102 may input a modality-shared representation output from the fuser 115 into a classifier 117 to output a class prediction value for multimodal data. In an embodiment, the class prediction value may be output as logits. The first client 102 may perform training by a cross entropy loss $\mathcal{L}_s$ that minimizes a difference between the class prediction value output from the classifier 117 and a preset correct answer value.
In addition, the first client 102 may input the modality-shared representation output from the fuser 115 into a first projection head 119 to generate a class-specific local prototype. The first client 102 may input the modality-shared representation into the first projection head 119 to map (project) the modality-shared representation into a shared representation space, and may generate a local prototype of each class by averaging the modality-shared representations belonging to each class. The first client 102 may transmit the local prototype of each class to the server 108.

The first client 102 may perform training by cross-modal prototype regularization (CMPR) loss based on the modality-shared representation projected into the shared representation space and a class-specific complete prototype received from the server 108.

The CMPR loss aims to reduce a distance between local and complete prototypes for each class. This narrows a gap between local and global models, enabling knowledge across various modalities to be transferred to a client, in which data of a specific modality is missing, through a complete prototype. In an embodiment, the CMPR loss may be expressed by Equation 3 below.

$$\text{Equation 3}$$

$$\mathcal{L}_{CMPR} = \sum_{k} \|r_i^k - P^k\|_2^2,$$

$r_i^k$ : modality-shared representation projected into shared representation space belonging to class k

$P^k$: complete prototype of class k

In addition, the first client 102 may input the first modality representation output from the first encoder 111 into a second projection head 121 to map (project) the first modality representation into the shared representation space, and perform training by cross-modal prototype contrastive (CMPC) loss based on the first modality representation projected into the shared representation space and the class-specific complete prototype.

The CMPC loss may cause the first modality representation projected into the shared representation space closer to the complete prototype of the same class as the first modality representation, and further away from the complete prototype of a different class from the first modality representation.

The CMPC loss in the first client 102 may be expressed by Equation 4 below.

$$\text{Equation 4}$$

$$\mathcal{L}_{ConA} = -\log \frac{\sum_{p \in P^k} \exp(s(z'_{Ai}, p)/\tau)}{\sum_{p \in P} \exp(s(z'_{Ai}, p)/\tau)}$$

$P^k$: complete prototype of class k

$z'_{Ai}$ : first modality representation projected into shared representation space

$s(z'_{Ai}, p)$ : similarity between first modality representation projected into shared representation space and complete prototype p

$\tau$: preset hyper-parameter

In addition, the first client 102 may input the second modality representation output from a second encoder 113 into the second projection head 121 to map (project) the second modality representation into the shared representation space, and perform learning using cross-modal alignment (CMA) loss based on the first modality representation and second modality representation projected into the shared representation space.

The CMA loss aims to reduce the negative impact (i.e., noise) caused by data of a missing modality (i.e., data of the second modality in the first client 102) being filled with zeros to be input to the encoder, and minimizes the difference between the first modality representation and the second modality representation projected into the shared representation space. That is, by aligning the representation of data of the missing second modality with the representation of data of the existing first modality, the negative impact caused by the missing modality can be reduced and the performance of the global model can be improved. The loss of cross-modal alignment (CMA) can be expressed by Equation 4 below.

Equation 4

$$\mathcal{L}_{CMA} = \sum_{i \in D_i} \|z'_{Ai} - z'_{Bi}\|_2^2$$

$z'_{Ai}$ : first modality representation projected into shared representation space

$z'_{Bi}$ : second modality representation projected into shared representation space

$\|z'_{Ai} - z'_{Bi}\|_2^2$ : distance between first modality representation and second modality representation projected into shared representation space (L2 distance).

Here, the first client 102 may perform training by the total loss according to Equation 5 below.

Equation 5

$$\mathcal{L} = \mathcal{L}_S + \alpha_{reg}\mathcal{L}_{CMPR} + \alpha_{con}\mathcal{L}_{CMPC} + \alpha_{align}\mathcal{L}_{CMA}$$

$\mathcal{L}_S$ : cross-entropy loss

$\mathcal{L}_{CMPR}$ : cross-modal prototype regularization loss

$\mathcal{L}_{CMPC}$ : cross-modal prototype contrastive loss

$\mathcal{L}_{CMA}$ : cross-modal alignment loss

$\alpha_{reg}, \alpha_{con}, \alpha_{align}$: predefined weights

Next, multimodal federated learning performed on the second client 104 will be described.

Since data of a first modality is not present in the second client 104, the second client 104 may input zero data, that is, a value of 0 to the first encoder 111 to extract a first modality representation. The second client 104 may input data of a second modality into the second encoder 113 to extract a second modality representation.

The second client 104 may input the first modality representation and the second modality representation into the fuser 115 to generate a modality-shared representation. The second client 104 may input the modality-shared representation output from the fuser 115 into the classifier 117 to output a class prediction value for multimodal data. In this case, the second client 104 may perform training by cross entropy loss $\mathcal{L}_S$ that minimizes the difference between the class prediction value output from the classifier 117 and a preset correct value.

In addition, the second client 104 may input the modality-shared representation into the first projection head 119 to generate a class-specific local prototype. The second client 104 may transmit the local prototype of each class to the server 108.

The second client 104 may perform training by cross-modal prototype normalization (CMPR) loss based on the modality-shared representation projected into the shared representation space and a class-specific complete prototype received from the server 108.

The second client 104 may input the second modality representation into the second projection head 121 to map (project) the second modality representation into a shared representation space, and perform training by the CMPC loss based on the second modality representation projected into the shared representation space and the class-specific complete prototype. The CMPC loss in the second client 104 may be expressed by Equation 6 below.

Equation 6

$$\mathcal{L}_{ConB} = -\log \frac{\sum_{p \in P^k} \exp(s(z'_{Bi}, p)/\tau)}{\sum_{p \in P} \exp(s(z'_{Bi}, p)/\tau)}$$

$P^k$: complete prototype of class k

$z'_{Bi}$ : second modality representation projected into shared representation space

$s(z'_{Bi}, p)$ : similarity between second modality representation projected into shared representation space and complete prototype p

$\tau$: predefined hyper-parameter

The second client 104 may input the first modality representation into the second projection head 121 to map (project) the first modality representation into the shared representation space, and perform training by cross-modal alignment (CMA) loss based on the first modality representation and the second modality representation projected into the shared representation space. The second client 104 may also perform training by the total loss according to Equation 5.

Next, multimodal federated learning performed on the third client 106 will be described.

The third client 106 may input data of a first modality into the first encoder 111 to extract a first modality representation and input data of a second modality into the second encoder 113 to extract a second modality representation. The third client 104 may input the first modality representation and the second modality representation into the fuser 115 to generate a modality-shared representation.

The third client 106 may input the modality-shared representation output from the fuser 115 into the classifier 117 to output a class prediction value for multimodal data. In this case, the third client 106 may perform training by cross entropy loss $\mathcal{L}_S$ that minimizes a class prediction value output from the classifier 117 and a preset correct value.

In addition, the third client 106 may input a modality-shared representation into the first projection head 119 to generate a class-specific local prototype. The third client 106 may transmit the local prototype of each class to the server 108.

The third client 106 may perform training by the CMPR loss based on the modality-shared representation projected into a shared representation space and the class-specific complete prototype received from the server 108.

The third client 106 may input the first modality representation and the second modality representation into the second projection head 121, respectively, to map (project) the first modality representation and the second modality representation into a shared representation space, and perform training by the CMPC loss based on the first modality representation and second modality representation projected into the shared representation space and the class-specific complete prototype. The CMPC loss $\mathcal{L}_{CMPC}$ in the third client 106 may be expressed by Equation 7 below.

Equation 7

$$\mathcal{L}_{CMPC} = \mathcal{L}_{ConA} + \mathcal{L}_{ConB}$$

$\mathcal{L}_{ConA}$ : cross-modal prototype contrastive loss in first client

$\mathcal{L}_{ConB}$ : cross-modal prototype contrastive loss in second client

In addition, the third client 106 may perform training by the CMA loss based on the first modality representation and second modality representation projected into the shared representation space. The third client 106 may also perform training by the total loss according to Equation 5.

According to the disclosed embodiment, even in environments where missing modalities are present, multimodal federated learning between multiple clients and servers can be efficiently performed while simultaneously improving learning performance, and, even if data of the missing missing modalities is filled with zeros, the noise or negative impact resulting therefrom can be minimized.

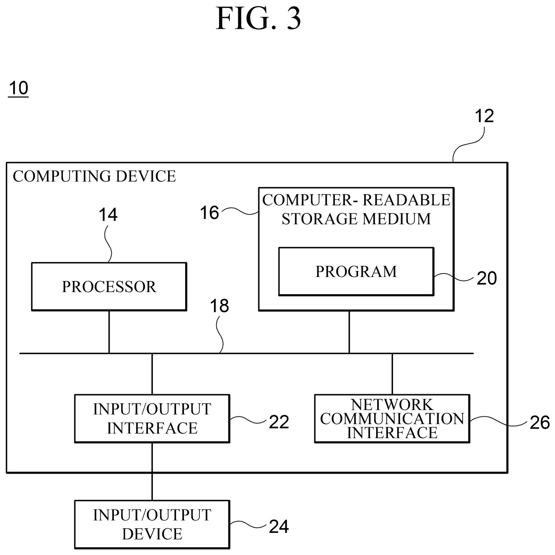

FIG. 3 is a block diagram for illustrating a computing environment 10 including a computing device suitable for use in exemplary embodiments. In the illustrated embodiment, respective components may have different functions and capabilities other than those described below, and include additional components in addition to those described below.

The illustrated computing environment 10 includes a computing device 12. In an embodiment, the computing device 12 may be a device for performing multimodal federated learning. In an embodiment, the computing device 12 may be the first client 102. In addition, the computing device 12 may be the second client 104. The computing device 12 may be the third client 106. The computing device 12 may be the server 108.

The computing device 12 includes at least one processor 14, a computer-readable storage medium 16, and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured so that the computing device 12 performs operations according to the exemplary embodiment.

The computer-readable storage medium 16 is configured to store the computer-executable instruction or program code, program data, and/or other suitable forms of information. A program 20 stored in the computer-readable storage medium 16 includes a set of instructions executable by the processor 14. In an embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a speech or sound input device, input devices such as various types of sensor devices and/or photographing devices, and/or output devices such as a display device, a printer, a speaker, and/or a network card. The exemplary input/output device 24 may be included inside the computing device 12 as a component configuring the computing device 12, or may be connected to the computing device 12 as a separate device distinct from the computing device 12.

According to the disclosed embodiments, even in environments where missing modalities are present, multimodal federated learning between multiple clients and servers can be efficiently performed while simultaneously improving learning performance, and, even if data of the missing modalities is filled with zeros, the noise or negative impact resulting therefrom can be minimized.

Although representative embodiments of the present disclosure have been described in detail above, those skilled in the art will understand that various modifications may be made to the above-described embodiments without departing from the scope of the present disclosure. Therefore, the scope of protection of the present disclosure should not be limited to the described embodiments, but should be defined not only by the patent claims described below but also by those equivalent to the patent claims.

**Claims**

1. A multimodal federated learning system comprising:

   a server; and
   a plurality of clients, each provided with a local model,
   wherein a neural network structure of the local model provided by each of the clients is identical,
   a client type of each of the clients is categorized based on whether a modality of training data used to train the local model is missing,
   each of the clients is configured to generate a class-specific local prototype from data of the input modality and transmit the class-specific local prototype to the server, and
   the server is configured to aggregate class-specific local prototypes received from a plurality of clients of different client types, generate a class-specific complete prototype based on the aggregated class-specific local prototypes, and transmit the generated class-specific complete prototype to each of the clients.

**2.** The multimodal federated learning system of claim 1, wherein data of a first modality and second modality is used as the training data, and

a client of a type in which the data of the first modality is present but the data of the second modality is missing is set as a first client, a client of a type in which the data of the first modality is missing but the data of the second modality is present is set as a second client, and a client of a type in which both the data of the first modality and the data of the second modality are present is set as a third client.

**3.** The multimodal federated learning system of claim 2, wherein the first client is configured to input data of a first modality into a first encoder to extract a first modality representation, fill missing data of a second modality with zeros and input the missing data of the second modality into a second encoder to extract a second modality representation, input the first modality representation and the second modality representation into a fuser to generate a modality-shared representation, input the modality-shared representation into a classifier to output a class prediction value, input the modality-shared representation into a first projection head to project the modality-shared representation into a shared representation space, and generate a local prototype of each class by averaging the modality-shared representations belonging to each class.

**4.** The multimodal federated learning system of claim 3, wherein the first client is configured to perform training by a cross-modal prototype regularization (CMPR) loss based on the modality-shared representation projected into the shared representation space and the class-specific complete prototype.

**5.** The multimodal federated learning system of claim 3, wherein the first client is configured to input the first modality representation into a second projection head and project the first modality representation into the shared representation space, and perform training by a cross-modal prototype contrastive (CMPC) loss, which causes the first modality representation to be closer to a complete prototype of the same class as the first modality representation and to be further away from a complete prototype of a different class from the first modality representation, based on the first modality representation projected into the shared representation space and the class-specific complete prototype.

**6.** The multimodal federated learning system of claim 5, wherein the first client is configured to input the second modality representation into the second projection head to project the second modality representation into the shared representation space and perform training by a cross-modal alignment (CMA) loss based on the first modality representation and second modality representation projected into the shared representation space.

**7.** The multimodal federated learning system of claim 3, wherein the first client is configured to input the modality-shared representation into the first projection head and project the modality-shared representation into the shared representation space, input a CMPR loss based on the modality-shared representation projected into the shared representation space and the class-specific complete prototype and the first modality representation into a second projection head and project the CMPR loss and the first modality representation into the shared representation space, input the CMPC loss based on the first modality representation projected into the shared representation space and the class-specific complete prototype and the second modality representation into the second projection head, and project the CMPC loss and the second modality representation into the shared representation space, and perform training by a CMA loss based on the first modality representation and second modality representation projected into the shared representation space.

**8.** The multimodal federated learning system of claim 2, wherein the second client is configured to fill missing data of a first modality with zeros and input the missing data of the first modality into a first encoder to extract a first modality representation, input data of a second modality into a second encoder to extract a second modality representation, input the first modality representation and the second modality representation into a fuser to generate a modality-shared representation, input the modality-shared representation into a classifier to output a class prediction value, input the modality-shared representation into a first projection head to project the modality-shared representation into a shared representation space, and generate a local prototype of each class by averaging the modality-shared representations belonging to each class.

**9.** The multimodal federated learning system of claim 8, wherein the second client is configured to perform training by a CMPR loss based on the modality-shared representation projected into the shared representation space and the class-specific complete prototype.

**10.** The multimodal federated learning system of claim 9, wherein the second client is configured to input the second modality representation into a second projection head and project the second modality representation into the shared representation space, and perform training by a CMPC loss, which causes the second modality representation to be closer to a complete prototype of the same class as the second modality representation and to be further away from a complete prototype of a different class from the second modality representation, based on the second modality representation projected into the shared representation space and the class-specific complete prototype.

11. The multimodal federated learning system of claim 10, wherein the second client is configured to input the first modality representation into the second projection head and project the first modality representation into the shared representation space and perform training by a cross-modal alignment CMA loss based on the first modality representation and second modality representation projected into the shared representation space.

12. The multimodal federated learning system of claim 8, wherein the second client is configured to input the modality-shared representation into the first projection head and project the modality-shared representation into the shared representation space, input a CMPR loss based on the modality-shared representation projected into the shared representation space and the class-specific complete prototype and the second modality representation into a second projection head and project the CMPR loss and the second modality representation into the shared representation space, input a CMPC loss based on the second modality representation projected into the shared representation space and the class-specific complete prototype and the first modality representation into the second projection head, and project the CMPC loss and the first modality representation into the shared representation space, and perform training by a CMA loss based on the first modality representation and second modality representation projected into the shared representation space.

13. The multimodal federated learning system of claim 2, wherein the third client is configured to input data of a first modality into a first encoder to extract a first modality representation, input data of a second modality into a second encoder to extract a second modality representation, input the first modality representation and the second modality representation into a fuser to generate a modality-shared representation, input the modality-shared representation into a classifier to output a class prediction value, input the modality-shared representation into a first projection head and project the modality-shared representation into a shared representation space, input a CMPR loss based on the modality-shared representation projected into the shared representation space and the class-specific complete prototype, the first modality representation, and the second modality representation into a second projection head and project the CMPR loss the first modality representation, and the second modality representation into the shared representation space, and perform training by a CMPC loss based on the first modality representation and second modality representation projected into the shared representation space and the class-specific complete prototype, and a CMA loss based on the first modality representation and second modality representation projected into the shared representation space.

14. A multimodal federated learning method performed on a computing device for performing multimodal federated learning with a server, the computing device including one or more processors, a memory that stores one or more programs executed by the one or more processors, and a local model, the multimodal federated learning method using data of a first modality and second modality as training data, and the computing device being a client of a type in which the data of the first modality is present but the data of the second modality is missing, the multimodal federated learning method comprising:

receiving a class-specific complete prototype from the server;
inputting the data of the first modality into a first encoder to extract a first modality representation;
filling the missing data of the second modality with zeros and inputting the missing data of the second modality into a second encoder to extract a second modality representation;
inputting the first modality representation and the second modality representation into a fuser to generate a modality-shared representation; and
inputting the modality-shared representation into a classifier to output a class prediction value.

15. A multimodal federated learning method performed on a computing device for performing multimodal federated learning with a server, the computing device including one or more processors, a memory that stores one or more programs executed by the one or more processors, and a local model, the multimodal federated learning using data of a first modality and second modality as training data, and the computing device being a client of a type in which the data of the first modality is not present and the data of the second modality is present, the multimodal federated learning method comprising:

receiving a class-specific complete prototype from the server;

filling the missing data of the first modality with zeros and the missing data of the first modality into a first encoder to extract a first modality representation;

inputting the data of the second modality into a second encoder to extract a second modality representation;

inputting the first modality representation and the second modality representation into a fuser to generate a modality-shared representation; and

inputting the modality-shared representation into a classifier to output a class prediction value.

# FIG. 1

100

FIRST CLIENT 102

SECOND CLIENT 104

THIRD CLIENT 106

COMMUNICATION NETWORK 150

SERVER 108

# FIG. 2

# FIG. 3

10

12

COMPUTING DEVICE

COMPUTER- READABLE
STORAGE MEDIUM

16

14

PROCESSOR

PROGRAM

20

18

INPUT/OUTPUT
INTERFACE

22

NETWORK
COMMUNICATION
INTERFACE

26

INPUT/OUTPUT
DEVICE

24

| | | Europäisches Patentamt |
| :---: | :--- | :--- |
| | | European Patent Office |
| | | Office européen des brevets |

**EUROPEAN SEARCH REPORT**

**Application Number**

EP 25 22 5374

## DOCUMENTS CONSIDERED TO BE RELEVANT

| Category | Citation of document with indication, where appropriate, of relevant passages | Relevant to claim | CLASSIFICATION OF THE APPLICATION (IPC) |
| :--- | :--- | :--- | :--- |
| X | Le Huy Q ET AL: "Cross-Modal Prototype based Multimodal Federated Learning under Severely Missing Modality", arXiv.org, 25 January 2024 (2024-01-25), XP093388587, Retrieved from the Internet: URL:https://arxiv.org/abs/2401.13898v1 [retrieved on 2026-04-16] * the whole document * | 1-15 | INV. G06N3/098 G06N3/045 G06N3/084 |
| A | Bao Guangyin ET AL: "Multimodal Federated Learning with Missing Modality via Prototype Mask and Contrast", arXiv.org, 21 December 2023 (2023-12-21), XP093388655, Retrieved from the Internet: URL:https://arxiv.org/pdf/2312.13508v1 [retrieved on 2026-04-16] * Section 3 * | 1-15 | |
| A | CHEN JIAYI ET AL: "FedMSplit Correlation-Adaptive Federated Multi-Task Learning across Multimodal Split Networks", 24TH INTERNATIONAL SYMPOSIUM ON RESEARCH IN ATTACKS, INTRUSIONS AND DEFENSES ACMPUB27, NEW YORK, NY, USA, 14 August 2022 (2022-08-14), pages 87-96, XP058808494, DOI: 10.1145/3534678.3539384 ISBN: 9781450385688 * Section 4 * | 1-15 | **TECHNICAL FIELDS SEARCHED (IPC)** G06N |

-/--

The present search report has been drawn up for all claims

| Place of search | Date of completion of the search | Examiner |
| :--- | :--- | :--- |
| The Hague | 16 April 2026 | Efthymiadis, K |

EPO FORM 1503 03.82 (P04C01)

Europäisches
Patentamt

European
Patent Office

Office européen
des brevets

# EUROPEAN SEARCH REPORT

**Application Number**

EP 25 22 5374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUE TAN ET AL: "FedProto: Federated Prototype Learning across Heterogeneous Clients", ARXIV.ORG CORNELL UNIVERSITY LIBRARY, 201 OLIN LIBRARY CORNELL UNIVERSITY ITHACA, NY 14853, 5 March 2022 (2022-03-05), XP091168954, * Section: Methodology * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 16 April 2026 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 2

**EP 4 773 046 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102646338